# EUROPÄISCHE PATENTANMELDUNG

(11) **EP 2 019 474 A2**
(43) Veröffentlichungstag der Anmeldung: **28.01.2009**
(21) Anmeldenummer: 08104840.7
(22) Anmeldetag: 23.07.2008
(51) Int. Cl.: H02K 3/20, H02K 21/30

(54) **Elektromotor für das Elektromotor-Pumpen-Aggregat eines Kraftfahrzeug-Antiblockiersystems**

(30) Priorität: 23.07.2007 DE 102007034225
(71) Anmelder: Continental Automotive GmbH, 30165 Hannover (DE)
(72) Erfinder: Junak, Jacek, Dr., 97209 Veitshöchheim (DE); Ombach, Grzegorz, Dr., 97209 Veitshöchheim (DE); Ackva, Ansgar, Dr., 97082 Würzburg (DE)

(57) **Zusammenfassung**

Die Erfindung betrifft einen Elektromotor für das Elektromotor-Pumpen-Aggregat eines Kraftfahrzeug-Antiblockiersystems. Dieser Motor weist einen Stator und einen Rotor auf. Der Rotor enthält Rotorzähne und eine exzentrische Abtriebswelle. Die Verteilung und/oder Dimensionierung der Rotorzähne ist dergestalt, dass der Verlauf des Motordrehmoments dem Verlauf des Lastmoments phasengleich folgt und das Motordrehmoment zu jedem Zeitpunkt einer vollständigen Umdrehung der Abtriebswelle größer ist als das Lastmoment.

## Beschreibung

Die Erfindung betrifft einen Elektromotor für ein Elektromotor-Pumpen-Aggregat eines Kraftfahrzeug-Antiblockiersystems.

Aus der DE 197 33 147 C1 ist bereits ein Motor-Pumpen-Aggregat bekannt, welches insbesondere für eine Kraftfahrzeug-Antiblockier-Bremsvorrichtung vorgesehen ist. Das bekannte Aggregat weist einen Elektromotor auf, der eine Kolbenpumpe mit auf einer Exzenter-Abtriebswelle des Elektromotors aufliegenden und von dieser angetriebenen Pumpenstößeln enthält. Eine Rotationsbewegung der Rotorwelle des Elektromotors wird umgesetzt in eine Hubbewegung der auf dem Exzenterzapfen aufliegenden Pumpenstößel. Bei der Hin- und Herbewegung der Pumpenstößel hat der Elektromotor gegen die Pumpenstößelkraft zu arbeiten, welche durch den Hydraulikflüssigkeitsdruck und den Ventilöffnungsdruck der Kolbenpumpe bestimmt ist. Das dabei vom Elektromotor aufzubringende Drehmoment ist durch diese Kraft und den Hebelarm der Exzentrizität zwischen der Achse der Exzenter-Abtriebswelle und der Achse der Motorwelle bestimmt. Das vom Elektromotor zu überwindende Lastmoment der Pumpe schwankt somit zwischen einem Minimalwert im oberen und unteren Totpunkt der Pumpenstößel und einem dazwischenliegenden Maximalwert bei maximalem Exzenter-Hebelarm. Diese im Rhythmus der von der Exzenter-Abtriebswelle des Elektromotors angetriebenen Pumpenstößel auftretenden Lastmoment-Schwankungen führen zu Betriebsgeräuschen. Diese werden dadurch vermieden, dass die für das Motordrehmoment wirksame Wicklung des Elektromotors ungleichmäßig über dessen Bohrungsumfang im Sinne eines an das Lastmoment angepassten und somit von Drehmomentschwankungen freien Pumpenantriebs ausgelegt wird.

Die Aufgabe der Erfindung besteht darin, einen Elektromotor für das Elektromotor-Pumpen-Aggregat eines Kraftfahrzeug-Antiblockiersystems anzugeben, dessen Aufbau vereinfacht ist.

Diese Aufgabe wird durch einen Elektromotor mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass das maximale Drehmoment des Motors nur dann bereitgestellt wird, wenn es von der Pumpe benötigt wird. Diese Vorteile werden dadurch erreicht, dass die Verteilung und/oder Dimensionierung der Rotorzähne derart gestaltet ist, dass der Verlauf des Motordrehmoments dem Verlauf des Lastmoments phasengleich folgt und das Motordrehmoment zu jedem Zeitpunkt einer vollständigen Umdrehung der Abtriebswelle nur wenig größer ist als das Lastmoment und eine Einhüllende für das Lastmoment bildet. Dabei ist das Lastmoment während einer Umdrehung der Abtriebswelle von den, vom anzutreibenden Aggregat, insbesondere einer Kolbenpumpe, verursachten Lastmomentschwankungen bestimmt. Das Motordrehmoment folgt diesen, insbesondere pulsierenden Lastmomentschwankungen in einem dem Lastmoment angenäherten sinusförmigen Verlauf phasengleich. Durch diese Abstimmung der Verteilung und/oder Dimensionierung der Rotorzähne im Hinblick auf das Lastmoment kann ein Motor gemäß der Erfindung einen vereinfachten Aufbau haben. Insbesondere kann das Gewicht des aktiven Materials des Motors, d. h. der Magnete und des Kupfers, und damit das Gewicht des gesamten Motors reduziert werden. Dies führt auch zu einer Einsparung bezüglich der Gesamtkosten des Motors. Vorzugsweise weist ein Motor gemäß der Erfindung lediglich zwei Hauptwicklungen auf, die mit den Permanentmagneten des Stators zur Erzeugung des Drehmoments des Motors zusammenwirken. Des Weiteren sind aufgrund des Umstandes, dass das Motordrehmoment zu jedem Zeitpunkt einer vollständigen Umdrehung der Abtriebswelle nur wenig größer ist als das Lastmoment, auch die Veränderungen bzw. Schwingungen der Motordrehzahl reduziert, wodurch auch das Motorgeräusch vermindert ist.

Gemäß einer vorteilhaften Ausgestaltung der Erfindung handelt es sich bei dem Elektromotor um einen zweipoligen Bürstenpermanentmagnetmotor, dessen Stator zwei Permanentmagnete und dessen Rotor vier Wicklungen aufweist, wobei zwei dieser Wicklungen die Hauptwicklungen sind und wobei die anderen beiden Wicklungen Hilfswicklungen sind, die zur Kommutation und zum Drehmomentstart dienen. Vorzugsweise haben die den Hauptwicklungen zugeordneten Rotorzähne eine größere Länge als die den Hilfswicklungen zugeordneten Rotorzähne. Ein Elektromotor mit einer derartigen Ausgestaltung weist im Vergleich zum Stand der Technik weniger Bauteile auf, kann trotz der unterschiedlichen Länge der Rotorzähne symmetrisch aufgebaut sein, weist einen einfachen Aufbau auf und kann in kostengünstiger Weise hergestellt werden.

Gemäß einer weiteren vorteilhaften Ausgestaltung der Erfindung handelt es sich bei dem Elektromotor um einen zweipoligen Bürstenpermanentmagnetmotor, dessen Stator zwei Permanentmagnete und dessen Rotor drei Wicklungen aufweist, wobei zwei dieser Wicklungen die Hauptwicklungen sind und wobei die dritte Wicklung eine Hilfswicklung ist, die zur Kommutation und zum Drehmomentstart dient. Vorzugsweise haben auch bei dieser Ausgestaltung die den Hauptwicklungen zugeordneten Rotorzähne eine größere Länge als der der Hilfswicklung zugeordnete Rotorzahn. Auch ein Elektromotor mit einer derartigen Ausgestaltung weist im Vergleich zum Stand der Technik weniger Bauteile auf, weist einen einfachen Aufbau auf und kann in kostengünstiger Weise hergestellt werden. Im Unterschied zu der im vorherigen Absatz beschriebenen Ausgestaltung zeigt ein Radialschnitt des Rotors, dass der Rotor eines Elektromotors gemäß dieser weiteren vorteilhaften Ausgestaltung und damit auch der Elektromotor als Gesamteinheit einen unsymmetrischen Aufbau hat. Die Anzahl der Bauteile eines Elektromotors gemäß dieser weiteren Ausgestaltung ist im Vergleich zur Anzahl der Bauteile eines Elektromotors gemäß der im vorherigen Absatz beschriebenen Ausgestaltung weiter reduziert.

Weitere vorteilhafte Eigenschaften der Erfindung ergeben sich aus deren nachfolgender Erläuterung anhand der Figuren. Es zeigt
- Figur 1: eine Skizze eines Radialschnitts eines Elektromotors gemäß einer ersten Ausgestaltung,
- Figur 2: ein Diagramm zur Veranschaulichung der Verbindung der Wicklungen des in der Figur 1 gezeigten Elektromotors auf dem Kommutator,
- Figur 3: ein Diagramm zur Veranschaulichung des Verlaufs des Motordrehmoments und des Lastmoments während einer Umdrehung der Abtriebswelle des Elektromotors,
- Figur 4: eine Skizze eines Radialschnitts eines Elektromotors gemäß einer zweiten Ausgestaltung,
- Figur 5: ein Diagramm zur Veranschaulichung der Verbindung der Wicklungen des in der Figur 4 gezeigten Elektromotors auf dem Kommutator und
- Figur 6: ein Diagramm zur Veranschaulichung des Verlaufes des Lastmoments während einer Umdrehung der Abtriebswel- le.

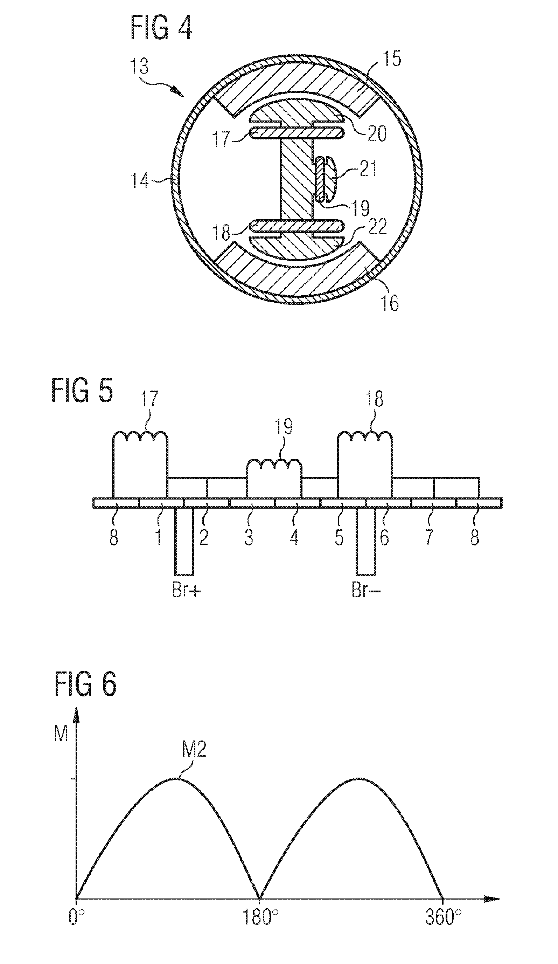

Die Erfindung betrifft einen Elektromotor, der insbesondere für das Elektromotor-Pumpen-Aggregat eines Kraftfahrzeug-Antiblockiersystems geeignet ist. Bei diesem Elektromotor handelt es sich um einen Gleichspannungs-Bürstenpermanentmagnetmotor. Er weist einen Stator und einen Rotor auf. Der Rotor enthält Rotorzähne, Rotorwicklungen und eine exzentrische Abtriebswelle. Aufgrund dieser Exzentrizität ist das Lastmoment M2 der Pumpe während einer Umdrehung der Abtriebswelle veränderlich und weist einen Verlauf auf, wie er in der Figur 6 gezeigt ist.

Gemäß der vorliegenden Erfindung wird ein Elektromotor bereitgestellt, dessen Drehmomentänderungen an den Verlauf des Lastmoments der Pumpe angepasst sind. Aufgrund dieser Anpassung sind zwar die Drehmomentschwankungen des Elektromotors erhöht, doch reicht das momentan bereitgestellte Drehmoment des Elektromotors aus, um zu jedem Zeitpunkt die Pumpe bzw. deren Stößel in gewünschter Weise zu steuern. Dies wird dadurch erreicht, dass die Verteilung und/oder Dimensionierung der Rotorzähne derart gestaltet ist, dass der Verlauf des Motordrehmoments dem Verlauf des Lastmoments phasengleich folgt und das Motordrehmoment zu jedem Zeitpunkt einer vollständigen Umdrehung der Abtriebswelle größer ist als das Lastmoment.

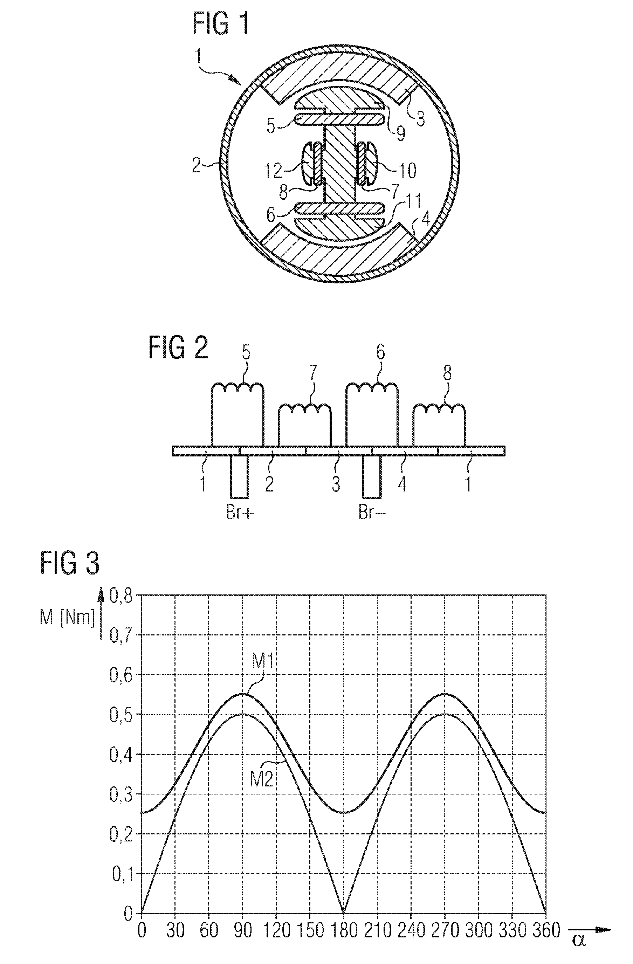

Eine erste Ausgestaltung eines derartigen Motors ist in der Figur 1 veranschaulicht, welche eine Skizze eines Radialschnitts eines Elektromotors zeigt.

Bei dem in der Figur 1 gezeigten Motor 1 handelt es sich um einen zweipoligen Bürstenpermanentmagnetmotor. Dieser weist ein zylinderförmiges Gehäuse 2 auf, an dessem Innenmantel ein Stator befestigt ist, welcher zwei Permanentmagnete 3 und 4 aufweist. Der Rotor des gezeigten Motors enthält insgesamt vier Wicklungen 5, 6, 7 und 8. Die Wicklung 5 ist um einen Rotorzahn 9, die Wicklung 6 um einen Rotorzahn 11, die Wicklung 7 um einen Rotorzahn 10 und die Wicklung 8 um einen Rotorzahn 12 gewickelt.

Bei den Wicklungen 5 und 6, die innerhalb des Rotors um 180° zueinander winkelversetzt angeordnet sind, handelt es sich um Hauptwicklungen, die mit den Permanentmagneten 3 und 4 des Stators zusammenwirken, um das Drehmoment des Elektromotors zu erzeugen. Die Wicklungen 7 und 8 sind Hilfswicklungen, die zur Kommutation und zum Drehmomentstart dienen. Die Hilfswicklungen 7 und 8 sind innerhalb des Rotors ebenfalls um 180° zueinander winkelversetzt angeordnet. Des Weiteren ist jede der Hilfswicklungen um jeweils 90° zu einer der Hauptwicklungen winkelversetzt.

Des Weiteren geht aus der Figur 1 hervor, dass die den Hauptwicklungen 5 und 6 zugeordneten Rotorzähne 9 und 11 eine größere Länge haben als die den Hilfswicklungen 7 und 8 zugeordneten Rotorzähne 10 und 12.

Das Drehmoment des in der Figur 1 gezeigten Motors wird durch das Zusammenwirken der Hauptwicklungen 5 und 6 mit den Permanentmagneten 3 und 4 des Stators während einer Umdrehung der Abtriebswelle derart erzeugt, dass es zwei Maxima aufweist, die um 180° voneinander beabstandet sind. Dies ist in der Figur 3 veranschaulicht, in welcher der Verlauf des Motordrehmoments M1 und der Verlauf des Lastmoments M2 während einer Umdrehung der Abtriebswelle dargestellt sind. Es ist ersichtlich, dass der Verlauf des Motordrehmoments dem Verlauf des Lastmoments phasengleich folgt und dass das Motordrehmoment zu jedem Zeitpunkt einer vollständigen Umdrehung der Abtriebswelle größer ist als das Lastmoment.

Dies wird durch eine Anpassung der Montageposition des Rotors an die Position der Pumpenstößel der Pumpe erreicht.

Aus der Darstellung gemäß der Figur 3 ist ersichtlich, dass der Motor sein maximales Drehmoment nur zu den Zeitpunkten zur Verfügung stellt, an denen es von der Pumpe benötigt wird. Aufgrund dieser Anpassung an das Lastmoment kann ein Motor gemäß der Erfindung einfach konstruiert sein, weniger Gewicht haben als ein Motor gemäß dem Stand der Technik und kostengünstig hergestellt werden.

Die Figur 2 zeigt ein Diagramm zur Veranschaulichung der Verbindung der Wicklungen des in der Figur 1 gezeigten Elektromotors auf dem Kommutator. Aus dem dargestellten Wicklungsschema ist ersichtlich, dass eine symmetrische Standardverteilung vorliegt, wobei in der Figur 2 die in der Figur 1 gezeigten Wicklungen 5, 6, 7, 8, Kommutatorlamellen 1, 2, 3, 4 und Bürsten Br+, Br- veranschaulicht sind.

Eine zweite Ausgestaltung eines Elektromotors gemäß der Erfindung ist in der Figur 4 veranschaulicht, welche eine Skizze eines Radialschnitts eines Elektromotors zeigt.

Bei dem in der Figur 4 gezeigten Motor 13 handelt es sich um einen zweipoligen Bürstenpermanentmagnetmotor. Dieser weist ein zylinderförmiges Gehäuse 14 auf, an dessem Innenmantel ein Stator befestigt ist, welcher zwei Permanentmagnete 15 und 16 aufweist. Der Rotor des gezeigten Motors enthält insgesamt drei Wicklungen 17, 18 und 19. Die Wicklung 17 ist um einen Rotorzahn 20, die Wicklung 18 um einen Rotorzahn 22 und die Wicklung 19 um einen Rotorzahn 21 gewickelt.

Bei den Wicklungen 17 und 18, die innerhalb des Rotors um 180° zueinander winkelversetzt angeordnet sind, handelt es sich um Hauptwicklungen, die mit den Permanentmagneten 15 und 16 des Stators zusammenwirken, um das Drehmoment des Elektromotors zu erzeugen. Die Wicklung 19 ist eine Hilfswicklung, die zur Kommutation und zum Drehmomentstart dient. Die Hilfswicklung 19 ist um jeweils 90° zu einer der Hauptwicklungen winkelversetzt.

Des Weiteren geht aus der Figur 4 hervor, dass die den Hauptwicklungen 17 und 18 zugeordneten Rotorzähne 20 und 22 eine größere Länge haben als der der Hilfswicklung 19 zugeordnete Rotorzahn 21.

Das Drehmoment des in der Figur 4 gezeigten Motors wird durch das Zusammenwirken der Hauptwicklungen 18 und 19 mit den Permanentmagneten 15 und 16 des Stators während einer Umdrehung der Abtriebswelle derart erzeugt, dass es zwei Maxima aufweist, die um 180° voneinander beabstandet sind. Dies ist in der Figur 3 veranschaulicht, in welcher der Verlauf des Motordrehmoments M1 und der Verlauf des Lastmoments M2 während einer Umdrehung der Abtriebswelle dargestellt sind. Es ist ersichtlich, dass der Verlauf des Motordrehmoments dem Verlauf des Lastmoments phasengleich folgt und dass das Motordrehmoment zu jedem Zeitpunkt einer vollständigen Umdrehung der Abtriebswelle größer ist als das Lastmoment.

Dies wird durch eine Anpassung der Montageposition des Rotors an die Position der Pumpenstößel der Pumpe erreicht.

Aus der Darstellung gemäß der Figur 3 ist ersichtlich, dass der Motor sein maximales Drehmoment nur zu den Zeitpunkten zur Verfügung stellt, an denen es von der Pumpe benötigt wird. Aufgrund dieser Anpassung an das Lastmoment kann ein Motor gemäß der Erfindung einfach konstruiert sein, weniger Gewicht haben als ein Motor gemäß dem Stand der Technik und kostengünstig hergestellt werden.

Die Figur 5 zeigt ein Diagramm zur Veranschaulichung der Verbindung der Wicklungen des in der Figur 4 gezeigten Elektromotors auf dem Kommutator. Aus dem dargestellten Wicklungsschema ist ersichtlich, dass eine nicht symmetrische Verteilung vorliegt, da der in der Figur 4 gezeigte Elektromotor nur eine zusätzliche Wicklung verwendet. In der Figur 5 sind die in der Figur 4 gezeigten Wicklungen 17, 18, 19, Kommutatorlamellen 1 - 8 und Bürsten Br+, Br- veranschaulicht.

Gemäß der in der Figur 4 gezeigten Ausgestaltung ist der Rotor und damit auch der Motor in seiner Gesamtheit asymmetrisch so aufgebaut, dass aufgrund der vorgenommenen Verteilung und Dimensionierung der Rotorzähne der Verlauf des Motordrehmoments dem Verlauf des Lastmoments phasengleich folgt und das Motordrehmoment zu jedem Zeitpunkt einer vollständigen Umdrehung der Abtriebswelle größer ist als das Lastmoment.

## Patentansprüche

1. Elektromotor für das Elektromotor-Pumpen-Aggregat eines Kraftfahrzeug-Antiblockiersystems, welcher einen Stator und einen Rotor aufweist, wobei der Rotor Rotorzähne und eine exzentrische Abtriebswelle enthält,
**dadurch gekennzeichnet,**
**dass** die Verteilung und/oder Dimensionierung der Rotorzähne (9-12: 20-22) derart gestaltet ist, dass der Verlauf des Motordrehmoments (M1) dem Verlauf des Lastmoments (M2) phasengleich folgt und das Motordrehmoment (M1) zu jedem Zeitpunkt einer vollständigen Umdrehung der Abtriebswelle größer ist als das Lastmoment (M2).

2. Elektromotor nach Anspruch 1,
**dadurch gekennzeichnet,**
**dass** er ein zweipoliger Bürstenpermanentmagnetmotor (1) ist, dessen Stator zwei Permanentmagnete (3,4) und dessen Rotor vier Wicklungen (5,6,7,8) aufweist, wobei zwei dieser Wicklungen (5,6) Hauptwicklungen sind, die mit den Permanentmagneten (3,4) des Stators zur Erzeugung des Drehmoments des Elektromotors zusammenwirken und wobei die anderen beiden Wicklungen (7,8) Hilfswicklungen sind, die zur Kommutation und zum Drehmomentstart dienen.

3. Elektromotor nach Anspruch 2,
**dadurch gekennzeichnet,**
**dass** die beiden Hauptwicklungen (5,6) um 180° zueinander winkelversetzt sind.

4. Elektromotor nach Anspruch 3,
**dadurch gekennzeichnet,**
**dass** die beiden Hilfswicklungen (7,8) um 180° zueinander und um jeweils 90° zu einer der Hauptwicklungen (5,6) winkelversetzt sind.

5. Elektromotor nach einem der Ansprüche 2 - 4,
**dadurch gekennzeichnet,**
**dass** die den Hauptwicklungen (5,6) zugeordneten Rotorzähne (9,11) eine größere Länge haben als die den Hilfswicklungen (7,8) zugeordneten Rotorzähne (10,12).

6. Elektromotor nach Anspruch 1,
**dadurch gekennzeichnet,**
**dass** er ein zweipoliger Bürstenpermanentmagnetmotor (13) ist, dessen Stator zwei Permanentmagnete (15,16) und dessen Rotor drei Wicklungen (17,18,19) aufweist, wobei zwei dieser Wicklungen (17,18) Hauptwicklungen sind, die mit den Permanentmagneten (15,16) des Stators zur Erzeugung des Drehmoments des Elektromotors zusammenwirken, und wobei die dritte Wicklung (19) des Rotors eine Hilfswicklung ist, die zur Kommutation und zum Drehmomentstart dient.

7. Elektromotor nach Anspruch 6,
**dadurch gekennzeichnet,**
**dass** die beiden Hauptwicklungen (17,18) um 180° zueinander winkelversetzt sind.

8. Elektromotor nach Anspruch 7,
**dadurch gekennzeichnet,**
**dass** die Hilfswicklung (19) um jeweils 90° zu einer der Hauptwicklungen (17,18) winkelversetzt ist.

9. Elektromotor nach einem der Ansprüche 6 - 8,
**dadurch gekennzeichnet,**
**dass** die den Hauptwicklungen (17,18) zugeordneten Rotorzähne (20,22) eine größere Länge haben als der der Hilfswicklung (19) zugeordnete Rotorzahn (21).
